# EUROPÄISCHE PATENTANMELDUNG

(11) **EP 4 141 289 A1**
(43) Veröffentlichungstag der Anmeldung: **01.03.2023**
(21) Anmeldenummer: 22000194.5
(22) Anmeldetag: 10.08.2022
(51) Int. Cl.: F16H 48/22, F16H 48/38

(54) **DIFFERENTIALGETRIEBE FÜR EIN FAHRZEUG**

(30) Priorität: 31.08.2021 DE 102021004450
(71) Anmelder: Hirschvogel Holding GmbH, 86920 Denklingen (DE)
(72) Erfinder: Rütjes, Uwe Alexander, D-82405 Wessobrunn (DE); Triesch, Gordon, D-86916 Kaufering (DE); Eisenmann, Markus, D-87675 Rettenbach (DE)

(57) **Zusammenfassung**

Die vorliegende Erfindung betrifft ein Differentialgetriebe (1) für ein Fahrzeug. Das Differentialgetriebe (1) umfasst ein Gehäuse (2) mit wenigstens einer Gleitbahn (20), ein erstes Achswellenrad (4) mit einer ersten Achswellenradverzahnung (5), ein zweites Achswellenrad (6) mit einer zweiten Achswellenradverzahnung (7) und wenigstens ein Ausgleichsrad (8, 9) mit einer Ausgleichsradverzahnung (11, 16). Das Ausgleichrad (8, 9) ist zwischen dem ersten Achswellenrad (4) und dem zweiten Achswellenrad (6) angeordnet, wobei die Ausgleichsradverzahnung (11, 16) im Eingriff mit der ersten Achswellenradverzahnung (5) und mit der zweiten Achswellenradverzahnung (7) steht. Die erste Achswellenradverzahnung (5) übt eine erste Verschiebekraft (F1) auf die Ausgleichsradverzahnung (11, 16) aus, und die zweite Achswellenradverzahnung (7) übt eine zweite Verschiebekraft (F2) auf die Ausgleichsradverzahnung (11, 16) aus. Das Ausgleichsrad (8, 9) ist in der Gleitbahn (20) verschiebbar gelagert, sodass sich das Ausgleichsrad (8, 9) zwischen dem ersten Achswellenrad (4) und dem zweiten Achswellenrad (6) bewegen kann. Das Ausgleichsrad (8, 9) wird durch die erste Verschiebekraft (F1) und die zweite Verschiebekraft (F2) in eine Gleichgewichtslage zwischen dem ersten Achswellenrad (4) und dem zweiten Achswellenrad (6) verschoben.

## Beschreibung

### Technisches Gebiet

Die vorliegende Erfindung betrifft ein Differentialgetriebe für ein Fahrzeug. Ein weiterer unabhängiger Anspruch ist auf ein Fahrzeug mit einem solchen Differentialgetriebe gerichtet.

### Stand der Technik

Durch die rasant fortschreitende zivilisatorischen Entwicklung und das veränderte Konsumverhalten in Richtung E-Commerce entsteht ein steigender Bedarf an Gütertransport, insbesondere auf begrenztem städtischem Raum. Klassische Lieferfahrzeuge wie LKWs oder PKWs haben an vielen Orten im urbanen Raum mit dem Mangel an Infrastruktur zu kämpfen, die für ein ordnungsgemäßes Funktionieren notwendig ist, wie z. B. fehlende Parkplätze, die ein Be- oder Entladen ermöglichen. Weiterhin gewinnt durch die zunehmende Verdichtung der Städte auch der Bedarf an kleineren und wendigen Fahrzeugen, insbesondere Lastenfahrrädern, an Bedeutung. Lastenfahrräder gibt es in verschiedenen Ausführungen. Beispielsweise können Lastenfahrräder mehrrädrig, insbesondere zweirädrig oder dreirädrig sein. Die Antriebssachse ist gewöhnlich an der Hinterachse angeordnet, welche durch ein Kettengetriebe oder einen elektrischen Motor angetrieben werden kann. Ein zum Transportieren von Gütern oder Kleinkindern ausgelegter Container, Behälter oder Kasten ist entweder vor dem Lenkrad in Höhe der Vorderachse oder hinter dem Sattel in Höhe der Hinterachse angeordnet und mit dem Fahrradrahmen verbunden.

Um die Wendigkeit der Fahrzeuge, insbesondere der Lastenfahrräder, zu verbessern bzw. den Kurvenradius zu verkleinern und die Stabilität in Kurvenfahrt zu erhöhen sind Lastenfahrräder bekannterweise mit Differentialen ausgestattet, die es ermöglichen, dass unterschiedliche Drehgeschwindigkeiten zweier Räder einer Achse auszugleichen, insbesondere bei Kurvenfahrten.

Bei den genannten Differentialgetrieben steht typischerweise ein Ausgleichsrad des Differentialgetriebes in Kontakt mit einem Gehäuse das Differentialgetriebes, wodurch es zu Reibung insbesondere zwischen einem Bolzen das Ausgleichsrades und dem Gehäuse kommt. Weiterhin weisen die einzelnen Bauteile innerhalb des Differentialgetriebes üblicherweise sehr enge Toleranzen auf, die zum Teil auch auf verschiedenen Maschinenaufspannungen basieren. Dadurch kann der Fall auftreten, dass die Ausgleichsräder sich nicht in einer optimalen Position innerhalb des Differentialgetriebes befinden, wenn verschiedene Kräfte zwischen den Achswellenrädern und den Ausgleichsräder wirken und vorgegebene Toleranzen eventuell nicht erfüllt sind.

DE 10 2018 211 812 A1 beschreibt ein Differentialgetriebe für ein Kraftfahrzeug, mit einem um eine erste Achswellendrehachse drehbar gelagerten ersten Achswellenkegelrad, einem um eine zweite Achswellendrehachse drehbar gelagerten zweiten Achswellenkegelrad sowie wenigstens einem an einem Umlaufradträger drehbar gelagerten Ausgleichskegelrad, das sowohl mit dem ersten Achswellenkegelrad als auch mit dem zweiten Achswellenkegelrad kämmt, wobei jedes der Achswellenkegelräder in axialer Richtung bezüglich der ersten Achswellendrehachse und/oder der zweiten Achswellendrehachse in eine von dem jeweils anderen der Achswellenkegelräder abgewandte Richtung festgesetzt ist. Dabei ist vorgesehen, dass die Lagerung des Ausgleichskegelrads an dem Umlaufradträger in axialer Richtung ein Spiel aufweist, innerhalb dessen das Ausgleichskegelrad bezüglich des Umlaufradträgers frei beweglich ist. Ähnliches ist auch in der US 4 959 043 A offenbart.

### Darstellung der Erfindung

Eine Aufgabe der Erfindung besteht darin, ein Differentialgetriebe bereitzustellen, welches den vorstehend beschriebenen Problemstellungen Rechnung trägt.

Die Aufgabe wird durch ein Differentialgetriebe mit den Merkmalen des Anspruchs 1 sowie ein Fahrzeug mit den Merkmalen des Anspruchs 12 gelöst. Vorteilhafte Weiterbildungen ergeben sich aus den Unteransprüchen, der Beschreibung und den Figuren.

Die Erfindung stellt ein Differentialgetriebe für ein Fahrzeug bereit, welches insbesondere ein Gehäuse, einen Deckel, zwei Achswellenräder sowie eines oder mehrere (in der Regel zwei bis vier) Ausgleichsräder umfasst. Das Gehäuse kann geschlossen oder offen gestaltet werden.

Gemäß der vorliegenden Erfindung weist das Differentialgetriebe eine fliegende Lagerung von wenigstens einem Ausgleichsrad auf. Das wenigstens eine Ausgleichsrad ist fliegend in wenigstens einem Kulissenstein gelagert. Der wenigstens eine Kulissenstein ist wiederum in einer Gleitbahn eines Gehäuses des Differentialgetriebes verschiebbar gelagert. Ein zentrales Merkmal stellen damit die Gleitbahnen dar, in denen sich die Ausgleichsräder, die Kulissensteine abstützt. Durch diese Gleitbahnen mit entsprechenden Gleitsitzen der Kulissensteine wird ermöglicht, dass sich die Ausgleichsräder selbst zentrieren, wodurch gleichzeitig die Reibung zwischen den Ausgleichsrädern und dem Gehäuse des Differentialgetriebes verringert werden kann.

In diesem Sinne wird gemäß einem ersten Aspekt der Erfindung ein Differentialgetriebe für ein Fahrzeug bereitgestellt. Das Differentialgetriebe umfasst ein Gehäuse mit wenigstens einer Gleitbahn, ein erstes Achswellenrad mit einer ersten Achswellenradverzahnung, ein zweites Achswellenrad mit einer zweiten Achswellenradverzahnung und wenigstens ein Ausgleichsrad mit einer Ausgleichsradverzahnung. Die Achswellenräder sind ausgebildet, die Verbindung zu einer Achse und den Rädern des Fahrzeugs herzustellen. Das wenigstens eine Ausgleichsrad kann Drehzahlunterschiede der Räder ausgleichen. Das wenigstens eine Ausgleichsrad ist dabei zwischen dem ersten Achswellenrad und dem zweiten Achswellenrad angeordnet, wobei die Ausgleichsradverzahnung im Eingriff mit der ersten Achswellenradverzahnung und der zweiten Achswellenradverzahnung steht. So kämmt die erste Achswellenradverzahnung des ersten Achswellenrades mit der Ausgleichsradverzahnung des wenigstens einen Ausgleichsrads. Auch die zweite Achswellenradverzahnung des zweiten Achswellenrades kämmt mit der Ausgleichsradverzahnung des wenigstens einen Ausgleichsrads.

In dem vorstehend beschriebenen Eingriff der Zahnräder treten Kräfte auf. Diese Kräfte drücken einerseits das wenigstens eine Ausgleichsrad in Richtung des Gehäuses, d.h. in Richtung der Längsachse des Ausgleichsrades. Andererseits drücken diese Kräfte die Achswellenräder in Richtung des Gehäuses und bewirken die Drehung. Wenn die Achswellenräder gegen das Gehäuse gedrückt werden, sich aber nicht bewegen können, dann wirkt die gleiche Kraft in der entgegengesetzten Richtung auch auf das wenigstens eine Ausgleichsrad. Damit tendiert das Ausgleichsrad dazu, sich von den Achswellenrädern weg zu bewegen. Der Zahneingriff wirkt also wie eine Feder, welche das wenigstens eine Ausgleichsrad verdrängen will. Erst wenn beide Kräfte im Gleichgewicht stehen, befindet sich das wenigstens eine Ausgleichsrad in einer stabilen Position. Je näher das Ausgleichsrad einem der Achswellenräder kommt, desto größer ist die Kraft. Insbesondere erst dann, wenn das Ausgleichsrad in der Mitte (zentrale Position) zwischen beiden Rädern steht, ist es in seiner stabilen Position angekommen.

In diesem Sinne übt die erste Achswellenradverzahnung erfindungsgemäß eine erste Verschiebekraft auf die Ausgleichsradverzahnung aus, wobei die zweite Achswellenradverzahnung eine zweite Verschiebekraft auf die Ausgleichsradverzahnung ausübt. Dies ist insbesondere im Betrieb des Differentialgetriebes der Fall, d.h. wenn die Achswellenräder drehen. Gemäß der vorliegenden Erfindung ist das Ausgleichsrad in der Gleitbahn über den Kulissenstein verschiebbar gelagert, sodass sich das Ausgleichsrad zwischen dem ersten Achswellenrad und dem zweiten Achswellenrad bewegen kann. Dabei wird das Ausgleichsrad durch die erste Verschiebekraft und die zweite Verschiebekraft in eine Gleichgewichtslage zwischen dem ersten Achswellenrad und dem zweiten Achswellenrad verschoben. Entgegen den aus dem Stand der Technik bekannten Lösungen ist das wenigstens eine Ausgleichsrad somit nicht starr, sondern mittels der wenigstens einen Gleitbahn und dem wenigstens einen Kulissenstein beweglich zwischen den Achswellenrädern gelagert. Auf diese Weise wird eine Art Selbstzentrierung der Verzahnung durch die Form des Gehäuses mit seinen Gleitsitzen bzw. Gleitbahnen ermöglicht, wodurch ebenfalls Reibungen des Ausgleichsrades verringert werden.

Die Besonderheit dieses Differentialaufbaus besteht mit anderen Worten somit insbesondere darin, dass sich die Ausgleichsräder aufgrund der Zahnkräfte selbst zentrieren und somit insbesondere in eine zentrale Lage verschieben können. Dadurch können bei gröberen Fertigungs- und Montagetoleranzen bessere Laufeigenschaften der Verzahnung erzielt werden. In diesem Zusammenhang sollten ein Differentialgetriebe, um gute Laufeigenschaften aufzuweisen, die Zahnräder den theoretisch korrekten Abstand zueinander haben. Das ist nicht ganz einfach, da beispielsweise die Ebenen für das Achswellenrad, nicht in der gleiche Aufspannung gefertigt werden können. Die Position der Mittelachse für die Ausgleichsräder muss mit Referenz zu den Ebenen der Achswellenrädern genauso genau gefertigt werden. Bei dem Differentialgetriebe gemäß der vorliegenden Erfindung sollte zwar weiterhin darauf geachtet werden, dass der Abstand der Achswellenräder in etwa korrekt ist (Abweichungen können in einem gewissen Bereich gut kompensiert werden). Die Komponenten stellen sich dann aber selbst in die korrekte Position. Dies stellt einen Vorteil gegenüber einer konventionellen Bauweise dar, gemäß welcher die Ausgleichsräder über einen Bolzen an dem Gehäuse lediglich drehbar aber nicht verschiebbar befestigt werden.

Das Differentialgetriebe umfasst weiterhin wenigstens einen Kulissenstein, wobei der Kulissenstein das Ausgleichsrad drehbar aufnimmt. Weiterhin ist der Kulissenstein gemeinsam mit dem Ausgleichsrad in der Gleitbahn verschiebbar gelagert, sodass sich der Kulissenstein und das Ausgleichsrad gemeinsam zwischen dem ersten Achswellenrad und dem zweiten Achswellenrad bewegen können. Die fliegende Lagerung des Ausgleichsrades über einen Kulissenstein in der Gleitbahn stellt eine besonders einfache und zuverlässige Lagerung dar. Wenn das Differentialgetriebe mehrere Ausgleichsräder umfasst, dann kann sich jedes der Ausgleichsräder unabhängig von den anderen Ausgleichrädern zwischen den Achswellenrädern verschieben und in die optimale Position bewegen. Dadurch wird dem Auftreten von Spannungen innerhalb des Getriebes besonders effektiv entgegengewirkt. Weiterhin kann der Kulissenstein vorteilhaft eine Kraftabstützfunktion erfüllen.

Das Ausgleichsrad ist insbesondere durch eine Gleitlagerung in den Kulissensteinen drehbar gelagert. Die Lagerung des Ausgleichsrades in dem Kulissenstein ermöglicht eine Optimierung der Gleitlagerung. So kann durch den Kulissenstein eine deutlich größere Gleitlager-Fläche für den Zapfen des Ausgleichsrades bereitgestellt werden, als dies bei herkömmlichen Lagerungen der Fall ist, gemäß welcher der Schaft des Ausgleichsrades jeweils direkt im Gehäuse des Differentialgetriebes gelagert ist. In diesem Sinne weist das Ausgleichsrad in einer Ausführungsform einen Zapfen auf, wobei der Kulissenstein eine zu dem Zapfen passende Aufnahme aufweist, und wobei der Zapfen drehbar innerhalb der Aufnahme gelagert ist. Bei der Lagerung kann es sich insbesondere um eine Gleitlagerung handeln. Alternativ kann der Kulissenstein einen Zapfen aufweisen und das Ausgleichsrad umfasst eine zu dem Zapfen passende Aufnahme, wobei der Zapfen drehbar innerhalb der Aufnahme gelagert ist, insbesondere durch eine Gleitlagerung. Der Zapfen kann einteilig mit dem Rest des Kulissensteins verbunden sein. Alternativ kann der Kulissenstein eine Bohrung aufweisen, in welche insbesondere drehfest ein Zylinderstift eingeführt ist. Der Zylinderstift ragt aus der Bohrung des Kulissensteins heraus, wobei das Ausgleichsrad mit einer zu dem Zylinderstift passenden Aufnahme drehbar auf dem Zylinderstift gelagert ist.

Üblicherweise ist das Gehäuse des Differentialgetriebes aus einem nicht gehärteten Material, um Kosten zu sparen. Gleiches kann für den Kulissenstein gelten. Das Ausgleichsrad hingegen ist üblicherweise aus einem gehärteten Material. Bei einer derartigen Materialkombination (Metall hart auf Metall weich) kann es aufgrund einer möglichen Relativbewegung und der damit verbundenen Reibung zwischen dem Ausgleichsrad und dem Kulissenstein und/oder dem Gehäuse zu erhöhtem Verschleiß insbesondere an dem Kulissenstein und/oder an dem Gehäuse kommen. Eine Reibscheibe, die man auch als Stützscheibe oder Gleitscheibe bezeichnen könnte, an entsprechenden Kontakt- und Reibflächen der genannten Elemente kann den Verschleiß deutlich senken. Was das Material der Reibscheibe angeht, so können beispielsweise unlegierte Stähle zum Einsatz kommen, z.B. C15, niedrig legierte Stähle oder auch höher legierte Stähle wie Nitrier-Stähle. Die Reibscheibe ermöglicht die Vermeidung oder zumindest die Reduzierung von Verschleiß. Die Reibscheibe kann dabei derart ausgelegt sein, dass sie selbst kein Verschleißteil darstellt und deshalb auch nicht gewechselt werden muss. In diesem Sinne umfasst das Differentialgetriebe in einer weiteren Ausführungsform weiterhin wenigstens eine Reibscheibe, wobei das Ausgleichsrad eine Rückenfläche aufweist, die sich an dem Gehäuse und/oder an dem Kulissenstein abstützt, und wobei die Reibscheibe zwischen der Rückenfläche und dem Gehäuse und/oder zwischen der Rückenfläche und dem Kulissenstein angeordnet ist.

Die Kulissensteine können verschieden gestaltet werden. So können im Längsschnitt rechteckige Profile mit einem Loch verwendet werden (d.h. rohrförmige Kulissensteine) oder z.B. Kulissensteine, die im Längsschnitt ein T-Profil aufweisen. Ein Kulissenstein, der ein im Längsschnitt rechteckiges Schnittprofil mit einem Loch umfasst (z.B. eine Bohrung, die zur Aufnahme des Bolzens des Ausgleichsrades zu dem Durchmesser des Bolzens passt), ist besonders einfach und kostengünstig herzustellen. Das Ausgleichsrad kann sich mit seiner Rückenfläche an dem Kulissenstein oder an dem Gehäuse abstützen. Eine Stützfläche des Kulissensteins kann dabei besonders groß ausfallen, wenn der Kulissenstein im Längsschnitt ein T-Profil aufweist. Zwischen dem Kulissenstein und der Rückenfläche des Ausgleichsrades kann dabei - wie vorstehend beschrieben - auch eine Reibscheibe angeordnet sein. In diesem Sinne ist der Kulissenstein in einer Ausführungsform im Längsschnitt T-förmig gestaltet und weist einen ersten Schenkel sowie einen zweiteren Schenkel auf, der senkrecht zu dem ersten Schenkel verläuft, wobei der erste Schenkel des T-förmigen Kulissensteins in der Gleitbahn verschiebbar gelagert ist, wohingegen die Rückenfläche des Ausgleichsrades sich an dem zweiten Schenkel des T-förmigen Kulissensteins abstützt.

In einer bevorzugten Ausführungsform weist das Differentialgetriebe wenigstens zwei Ausgleichsräder auf (bevorzugt drei oder vier Ausgleichsräder), die in wenigstens zwei Kulissensteinen (bevorzugt in drei oder vier Kulissensteinen) drehbar gelagert sind, wobei die Kulissensteine in wenigstens zwei Gleitbahnen (bevorzugt in drei oder vier Gleitbahnen) des Getriebegehäuses zwischen den beiden Achswellenrädern verschiebbar gelagert sind. Der erste Kulissenstein (der wenigstens zwei Kulissensteine) lagert das erste Ausgleichsrad, wobei der erste Kulissenstein in der ersten Gleitbahn der wenigstens zwei Gleitbahnen verschieblich gelagert ist. Der zweite Kulissenstein (der wenigstens zwei Kulissensteine) lagert das zweite Ausgleichsrad, wobei der zweite Kulissenstein in der zweite Gleitbahn der wenigstens zwei Gleitbahnen verschieblich gelagert ist. In diesem Sinne umfasst das Differentialgetriebe in einer Ausführungsform ein erstes Ausgleichsrad mit einer ersten Ausgleichsradverzahnung, ein zweites Ausgleichsrad mit einer zweiten Ausgleichsradverzahnung, einen ersten Kulissenstein und einen zweiten Kulissenstein, wobei der erste Kulissenstein das erste Ausgleichsrad drehbar aufnimmt und der zweite Kulissenstein das zweite Ausgleichsrad drehbar aufnimmt, und wobei die beiden Ausgleichräder zwischen dem ersten Achswellenrad und dem zweiten Achswellenrad angeordnet sind. Die erste Ausgleichsradverzahnung und die zweite Ausgleichsradverzahnung stehen im Eingriff (mit anderen Worten: kämmen) mit der ersten Achswellenradverzahnung und mit der zweiten Achswellenradverzahnung, wobei die erste Achswellenradverzahnung eine erste Verschiebekraft auf die erste Ausgleichsradverzahnung sowie auf die zweite Ausgleichsradverzahnung ausübt und wobei die zweite Achswellenradverzahnung eine zweite Verschiebekraft auf die erste Ausgleichsradverzahnung sowie auf die zweite Ausgleichsradverzahnung ausübt. Das Gehäuse weist eine erste Gleitbahn und eine zweite Gleitbahn auf, wobei der erste Kulissenstein gemeinsam mit dem ersten Ausgleichsrad in der ersten Gleitbahn verschiebbar gelagert ist, sodass sich der erste Kulissenstein und das erste Ausgleichsrad zwischen dem ersten Achswellenrad und dem zweiten Achswellenrad bewegen können, und wobei der zweite Kulissenstein gemeinsam mit dem zweiten Ausgleichsrad in der zweiten Gleitbahn verschiebbar gelagert ist, sodass sich der zweite Kulissenstein und das zweite Ausgleichsrad zwischen dem ersten Achswellenrad und dem zweiten Achswellenrad bewegen können. Das erste Ausgleichsrad und das zweite Ausgleichsrad werden durch die erste Verschiebekraft und die zweite Verschiebekraft jeweils in eine Gleichgewichtslage zwischen dem ersten Achswellenrad und dem zweiten Achswellenrad verschoben.

Die Ausgleichsräder können sich in eine "zentrale Lage" verschieben, die eine Position der Ausgleichsräder relativ zu den Achswellenrädern beschreibt. Bei Kegelrädern gibt es den sogenannten Achskreuzungspunkt, d.h. die Längsachsen der Ausgleichsräder schneiden sich in einem Punkt, der idealerweise der Mittelpunkt des Differentials ist. Das ist die theoretische Position, in der die Ausgleichsräder liegen sollten, damit sie optimal laufen und beste Eigenschaften aufweisen. Wenn die Ausgleichsräder in der Gleichgewichtslage sind, dann befinden sie sich bevorzugt in oder zumindest nahe diesem theoretischen Punkt (Achskreuzungspunkt). In diesem Sinne ist das erste Ausgleichsrad ein Kegelrad mit einer ersten Längsachse, und das zweite Ausgleichsrad ist ein Kegelrad mit einer zweiten Längsachse. Dabei werden das erste Ausgleichsrad und das zweite Ausgleichsrad durch die erste Verschiebekraft sowie durch die zweite Verschiebekraft derart in die Gleichgewichtslage verschoben, dass sich ein Schnittpunkt der Verlängerungen der ersten Längsachse und der zweiten Längsachse in Richtung eines Achskreuzungspunktes bewegt, der in dem Mittelpunkt des Differentialgetriebes liegt. Besonders bevorzugt werden das erste Ausgleichsrad und das zweite Ausgleichsrad durch die erste Verschiebekraft sowie durch die zweite Verschiebekraft derart in die Gleichgewichtslage verschoben, dass sich der Schnittpunkt der ersten Längsachse und der zweiten Längsachse bis in den Achskreuzungspunkt bewegt. In dem Mittelpunkt des Differentialgetriebes treffen sich insbesondere die Längsachsen der Ausgleichsräder und die Längsachsen der Achswellenräder, wenn sich die Achswellenräder und Ausgleichsräder in ihrer konstruktiv vorgesehenen Position befinden. dem Mittelpunkt Die Längsachsen bzw. Rotationsachsen der Achswellenräder sind kolinear, bilden also ein und die gleiche Achse. Auch die Längsachsen bzw. Rotationsachsen der Ausgleichsräder Achswellenräder sind kolinear, bilden also ein und die gleiche Achse. Die Achsen aller Zahnräder im Differential sollten sich in einem Punkt schneiden, dem Achskreuzungspunkt.

Des Weiteren kann bei der Verwendung von Federscheiben ein spielfreier Betrieb eingestellt werden, ohne dass eine Abstimmung der Zahnräder bei der Montage notwendig ist. Dadurch kann eine sehr einfache und schnelle Montage realisiert werden. Die Federscheiben können dabei entweder im Bereich der Achswellenräder oder im Bereich des wenigstens einen Ausgleichsrads angeordnet sein.

In diesem Sinne umfasst das Differentialgetriebe in einer weiteren Ausführungsform wenigstens eine Achswellenrad-Federscheibe, wobei die Achswellenrad-Federscheibe derart zwischen einem der Achswellenräder und dem Gehäuse angeordnet ist, dass die Achswellenrad-Federscheibe eine Achswellenrad-Federkraft auf das betreffende Achswellenrad ausübt, sodass die Achswellenrad-Federkraft die Achswellenradverzahnung des betreffenden Achswellenrades in den Eingriff mit der Ausgleichsradverzahnung des wenigstens einen Ausgleichsrades drückt. Alternativ oder zusätzlich kann das Differentialgetriebe weiterhin wenigstens eine Ausgleichsrad-Federscheibe umfassen, wobei die Ausgleichsrad-Federscheibe derart zwischen dem wenigstens einen Ausgleichsrad und dem Gehäuse oder zwischen dem wenigstens einen Ausgleichsrad und dem wenigstens einen Kulissenstein angeordnet ist, dass die Ausgleichsrad-Federscheibe eine Ausgleichsrad-Federkraft auf das Ausgleichsrad ausübt, sodass die Ausgleichsrad-Federkraft die Ausgleichsradverzahnung des Ausgleichsrads in den Eingriff mit den Achswellenradverzahnungen der Achswellenräder drückt.

Bei einem klassischen Differentialgetriebe, insbesondere im Pkw-Bereich, wird ein Antriebsrad normalerweise mit dem Gehäuse des Differentialgetriebes verschraubt oder verschweißt. Durch eine spezielle Außengeometrie des Gehäuses des erfindungsgemäßen Differentialgetriebes kann das Gehäuse besonders effizient mit einem Antriebselement (z.B. mit einem Antriebsrad oder einem Teil einer Achswelle) verbunden werden, welches das Gehäuse des Differentialgetriebes antreibt, z.B. durch einen Formschluss oder durch Kleben. So kann das Gehäuse eine Tripoden-Geometrie aufweisen, die für einen Formschluss beispielsweise mit dem Antriebsrad genutzt werden kann. Anstatt das Gehäuse von außen rund auszugestalten, kann das Gehäuse Material und Gewicht sparende Taschen (Ausbuchtungen) aufweisen, die nach innen gerichtet sind, in die entsprechend nach innen gerichtete Gegenelemente des Antriebsrades formschlüssig eingreifen können. Alternativ kann ein Antriebselement auch stoffschlüssig mit dem Gehäuse verbunden werden. Mit anderen Worten besteht der Gedanke darin, dass durch die "Tripoden"-Außenform des Gehäuses "Nuten" erzeugt werden, die sich für einen Formschluss mit dem Antriebsrad besonders eignen. In diesem Sinne weist eine äußere Oberfläche des Gehäuses eine Tripoden-Geometrie auf, sodass eine komplementär zu der Tripoden-Geometrie der äußeren Oberfläche des Gehäuses geformte innere Oberfläche eines Antriebselements formschlüssig mit dem Gehäuse verbunden werden kann.

Gemäß einem zweiten Aspekt der Erfindung wird ein Fahrzeug bereitgestellt. Das Fahrzeug umfasst ein Differentialgetriebe gemäß einem ersten Aspekt der Erfindung. Bei dem Fahrzeug kann es sich um ein mehrspuriges Fahrzeug handeln, insbesondere mit zwei an einer gemeinsamen (insbesondere angetriebenen) Achse angeordneten Rädern handeln. Bei dem Fahrzeug kann es sich insbesondere um einen Personenkraftwagen (Pkw), Leichtkraftfahrzeug oder um ein Lastenfahrrad (E-Bike, Pedelec, S-Pedelec, ...) handeln. Bei dem Fahrzeug kann es sich auch um ein nicht elektrisch, also auch rein mit Muskelkraft angetriebenes, insbesondere mehrspuriges, Fahrrad oder Lastenrad handeln. Weiterhin eignet sich das erfindungsgemäße Differentialgetriebe insbesondere zum Einbau und Betrieb in 3- oder 4-Räderfahrzeugen, in einem Quad oder in einem Lastkraftwagen (Lkw).

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei unter Bezugnahme auf die begleitenden Zeichnungen.

### Kurze Beschreibung der Figuren

Bevorzugte weitere Ausführungsformen der Erfindung werden durch die nachfolgende Beschreibung der schematischen Figuren näher erläutert. Dabei zeigt
- Figur 1: eine perspektivische Schnittdarstellung eines Ausführungsbeispiels eines Teils eines Differentialgetriebes gemäß einem ersten Ausführungsbeispiel der Erfindung mit einem T-förmigen Kulissenstein,
- Figur 2: eine alternative perspektivische Schnittdarstellung des Differentialgetriebes nach Figur 1,
- Figur 3: eine Längsschnittdarstellung einer Reibscheibe oder einer Federscheibe, die zwischen einem Kulissenstein und einem Ausgleichsrad des Differentialgetriebes nach Figur 1 angeordnet ist,
- Figur 4: eine Längsschnittdarstellung einer Reibscheibe oder einer Federscheibe, die zwischen einem alternativen rohrförmigen Kulissenstein und einem Ausgleichsrad des Differentialgetriebes nach Figur 1 angeordnet ist,
- Figur 5: eine perspektivische Schnittdarstellung des Differentialgetriebes nach Figur 1 mit einer Anlaufscheibe und einer Achswellenrad-Federscheibe,
- Figur 6: eine perspektivische Schnittdarstellung des Differentialgetriebes nach Figur 1 mit einer Achswellenrad-Federscheibe aber ohne eine Anlaufscheibe,
- Figur 7: eine perspektivische Schnittdarstellung des Differentialgetriebes nach Figur 1 mit einer Anlaufscheibe aber ohne eine Achswellenrad-Federscheibe,
- Figur 8: eine perspektivische Ansicht eines alternativen Kulissensteins mit Zapfen,
- Figur 9: eine alternative perspektivische Ansicht des Kulissensteins nach Figur 8,
- Figur 10: eine alternative perspektivische Ansicht des Kulissensteins nach Figur 8, wobei ein Ausgleichsrad mit Aufnahme auf den Zapfen aufgesetzt ist,
- Figur 11: eine alternative perspektivische Ansicht von Kulissenstein und Ausgleichsrad nach Figur 10,
- Figur 12: eine perspektivische Ansicht des Ausgleichsrades nach Figur 10,
- Figur 13: eine alternative perspektivische Ansicht des Ausgleichsrades nach Figur 10,
- Figur 14: eine Querschnittsdarstellung eines Ausführungsbeispiels eines Teils eines Differentialgetriebes gemäß einem zweiten Ausführungsbeispiel der Erfindung mit einer Zapfenanordnung und
- Figur 15: eine perspektivische Ansicht eines Ausführungsbeispiels eines Differentialgetriebes gemäß einem dritten Ausführungsbeispiel der Erfindung mit einem Gehäuse, das eine Tripoden-Geometrie aufweist.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden. Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

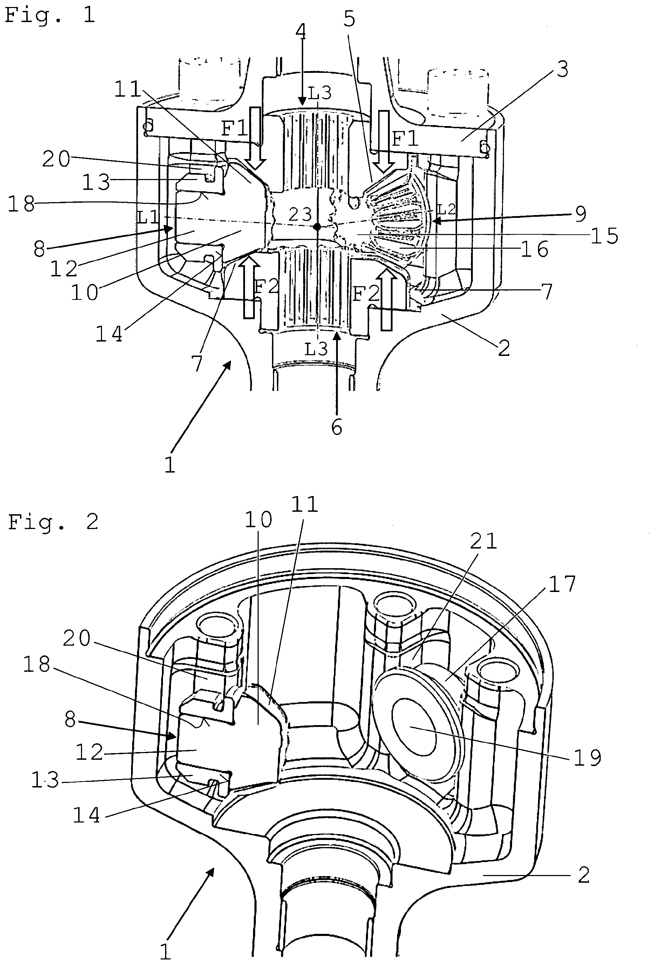

Figur 1 und 2 zeigen ein Differentialgetriebe 1 für ein nicht dargestelltes Kraftfahrzeug. Bei dem Kraftfahrzeug kann es sich insbesondere um ein Lastenfahrrad handeln, wobei das Differentialgetriebe im Bereich einer Vorderachse oder im Bereich einer Hinterachse des Lastenfahrrads angeordnet ist, um Drehzahlunterschiede von Rädern auszugleichen, die an gegenüberliegenden Enden der Vorderachse bzw. der Hinterachse angebracht sind.

Das Differentialgetriebe 1 umfasst in dem gezeigten Ausführungsbeispiel ein Gehäuse 2, wobei eine Stirnseite des Gehäuses 2 mit einem Deckel 3 verschlossen ist. Das Differentialgetriebe 1 umfasst weiterhin ein erstes Achswellenrad 4 mit einer ersten Achswellenradverzahnung 5 sowie ein zweites Achswellenrad 6 mit einer zweiten Achswellenradverzahnung 7. Sowohl das erste Achswellenrad 4 als auch das zweite Achswellenrad 6 sind in dem gezeigten Ausführungsbeispiel Kegelräder. Somit handelt es sich auch bei der ersten Achswellenradverzahnung 5 sowie bei der zweiten Achswellenradverzahnung 7 um Kegelradverzahnungen.

Ferner umfasst das Differentialgetriebe 1 insgesamt drei Ausgleichsräder, von denen in Figur 1 aufgrund der Schnittführung lediglich ein erstes Ausgleichsrad 8 und ein zweites Ausgleichsrad 9 gezeigt sind und von denen in Figur 2 lediglich das erste Ausgleichsrad 8 gezeigt ist. Die Ausgleichsräder 8, 9 sind in dem gezeigten Ausführungsbeispiel in einer Umfangsrichtung äquidistant jeweils um 120° voneinander beabstandet angeordnet. Die Ausgleichsräder 8, 9 sind in dem gezeigten Ausführungsbeispiel identisch ausgeführt, d. h. es handelt sich bei den Ausgleichsrädern 8, 9 um Gleichteile. Alle drei Ausgleichsräder sind in dem gezeigten Ausführungsbeispiel Kegelräder.

Das erste Ausgleichsrad 8 weist einen ersten Teller 10 auf, welcher an seiner radial äußeren Fläche eine erste Ausgleichsradverzahnung 11 bildet, bei der es sich um eine Kegelradverzahnung handelt. Senkrecht zu dem ersten Teller 10 orientiert weist das erste Ausgleichsrad 8 weiterhin einen ersten Zapfen 12 auf, welcher der drehbaren Lagerung innerhalb eines ersten Kulissensteins 13 dient. Eine erste Rückenfläche 14 des ersten Ausgleichsrades 8 ist dem ersten Kulissenstein 13 zugewandt. Das erste Ausgleichsrad 8 stützt sich mit seiner ersten Rückenfläche 14 an dem ersten Kulissenstein 13 ab. Das zweite Ausgleichsrad 9 weist einen zweiten Teller 15 auf, welcher an seiner radial äußeren Fläche eine zweite Ausgleichsradverzahnung 16 bildet, bei der es sich um eine Kegelradverzahnung handelt. Senkrecht zu dem zweiten Teller 15 orientiert weist das zweite Ausgleichsrad 9 weiterhin einen zweiten Zapfen auf (nicht sichtbar in Figur 1, 2; vgl. das identisch ausgeführte erste Ausgleichsrad 8), welcher der drehbaren Lagerung innerhalb eines zweiten Kulissensteins 17 dient (Figur 2). Eine zweite Rückenfläche (nicht sichtbar in Figur 1, 2; vgl. das identisch ausgeführte erste Ausgleichsrad 8) des zweiten Ausgleichsrades 9 ist dem zweiten Kulissenstein 17 zugewandt. Das zweite Ausgleichsrad 9 stützt sich mit seiner zweiten Rückenfläche an dem zweiten Kulissenstein 17 ab. Das dritte Ausgleichsrad (nicht sichtbar in Figur 1, 2; vergleiche die identisch ausgeführten Ausgleichsräder 8, 9) ist auf die gleiche Weise wie das erste Ausgleichsrad 8 und das zweite Ausgleichsrad 9 drehbar in einem dritten Kulissenstein (nicht sichtbar ein Figur 1, 2; vergleiche die identisch ausgeführten Kulissensteine 13, 17) aufgenommen.

Der erste Kulissenstein 13 weist eine zu dem ersten Zapfen 12 des ersten Ausgleichsrades 8 passende erste Aufnahme 18 auf. Der erste Zapfen 12 des ersten Ausgleichsrades 8 ist in dieser ersten Aufnahme 18 drehbar gelagert. Dabei besteht zwischen der ersten Aufnahme 18 und dem ersten Zapfen 12 insbesondere eine Gleitlagerung. Auf die gleiche Weise weist der zweite Kulissenstein 17 eine zu dem zweiten Zapfen des zweiten Ausgleichsrades 9 passende zweite Aufnahme 19 auf. Der zweite Zapfen des zweiten Ausgleichsrades 9 ist in dieser zweiten Aufnahme 19 drehbar gelagert. Dabei besteht zwischen der zweiten Aufnahme 19 und dem zweiten Zapfen des zweiten Ausgleichsrades 9 insbesondere eine Gleitlagerung. Der nicht gezeigte dritte Kulissenstein weist eine dritte Aufnahme auf, die gleich ausgeführt ist wie bei dem ersten Kulissenstein 13 und wie bei dem zweiten Kulissenstein 17. Dabei ist auch der nicht gezeigte dritte Zapfen des dritten Ausgleichsrades drehbar innerhalb der dritten Aufnahme gelagert, insbesondere mittels einer Gleitlagerung.

Im Folgenden wird das Ausführungsbeispiel nach Figur 1 und 2 überwiegend im Zusammenhang mit dem ersten Ausgleichsrad 8 und dem zweiten Ausgleichsrad 9 sowie mit dem ersten Kulissenstein 13 und mit dem zweiten Kulissenstein 17 beschrieben, die in einer ersten Gleitbahn 20 (erster Kulissenstein 13) des Gehäuses 2 bzw. in einer zweiten Gleitbahn 21 (zweiter Kulissenstein 17) des Gehäuses 2 zwischen dem ersten Achswellenrad 4 und dem zweiten Achswellenrad 6 verschoben werden können. Diese Ausführungen gelten jedoch analog auch für das nicht gezeigte dritte Ausgleichsrad, für den nicht gezeigten dritten Kulissenstein sowie für die nicht gezeigte dritte Gleitbahn.

Die beiden Ausgleichräder 8, 9 sind zwischen dem ersten Achswellenrad 4 und dem zweiten Achswellenrad 6 angeordnet. Die erste Ausgleichsradverzahnung 11 und die zweite Ausgleichsradverzahnung 16 stehen dabei im Eingriff mit der ersten Achswellenradverzahnung 5 und mit der zweiten Achswellenradverzahnung 7. Die erste Achswellenradverzahnung 5 übt eine erste Verschiebekraft F1 auf die erste konische Ausgleichsradverzahnung 11 sowie auf die zweite konische Ausgleichsradverzahnung 16 aus. Die erste Verschiebekraft F1 verläuft dabei in dem gezeigten Ausführungsbeispiel parallel zu einer Längsachse des ersten Achswellenrades 4. Analog übt die zweite Achswellenradverzahnung 7 eine zweite Verschiebekraft F2 auf die erste Ausgleichsradverzahnung 11 sowie auf die zweite Ausgleichsradverzahnung 16 aus. Die zweite Verschiebekraft F2 ist der ersten Verschiebekraft F1 entgegengesetzt.

Der erste Kulissenstein 13 ist gemeinsam mit dem ersten Ausgleichsrad 8 in der ersten Gleitbahn 20 verschiebbar gelagert, sodass sich der erste Kulissenstein 13 und das erste Ausgleichsrad 8 zwischen dem ersten Achswellenrad 4 und dem zweiten Achswellenrad 6 bewegen können. Die erste Gleitbahn 20 ist in der Umfangsrichtung sowie in radialer Richtung durch eine an die Form und Größe des ersten Kulissensteins 13 angepasste Ausnehmung gebildet, die sich in der axialen Richtung (in welcher auch die Achsen des Kraftfahrzeugs verlaufen, welche mit den Achswellenrädern 4, 6 verbunden sind) zwischen dem ersten Achswellenrad 4 und dem zweiten Achswellenrad 6 erstreckt. Analog ist der zweite Kulissenstein 17 gemeinsam mit dem zweiten Ausgleichsrad 9 in der zweiten Gleitbahn 21 verschiebbar gelagert, sodass sich der zweite Kulissenstein 17 und das zweite Ausgleichsrad 9 zwischen dem ersten Achswellenrad 4 und dem zweiten Achswellenrad 6 bewegen können. Die zweite Gleitbahn 21 ist in der Umfangsrichtung sowie in radialer Richtung durch eine an die Form und Größe des zweiten Kulissensteins 17 angepasste Ausnehmung gebildet, die sich in der axialen Richtung zwischen dem ersten Achswellenrad 4 und dem zweiten Achswellenrad 6 erstreckt. Das erste Ausgleichsrad 8 und das zweite Ausgleichsrad 9 werden durch die erste Verschiebekraft F1 und die zweite Verschiebekraft F2 jeweils unabhängig voneinander in eine Gleichgewichtslage zwischen dem ersten Achswellenrad 4 und dem zweiten Achswellenrad 6 verschoben.

In dem vorstehend beschriebenen Zahneingriff treten die Verschiebekräfte F1, F2 auf. Diese Verschiebekräfte F1, F2 drücken durch die Konizität der Achswellenräder 4, 6 und der Ausgleichsräder 8, 9 einerseits die Ausgleichsräder 8, 9 in Richtung des Gehäuses 2, d.h. in Richtung einer Längsachse des Zapfens 12 des betreffenden Ausgleichsrades 8, 9. Andererseits drücken die Verschiebekräfte F1, F2 die Achswellenräder 4, 6 in Richtung des Gehäuses 2 bzw. in Richtung des Deckels 3 und bewirken die Drehung. Wenn die Achswellenräder 4, 6 gegen das Gehäuse 2 bzw. gegen den Deckel 3 gedrückt werden, sich aber nicht bewegen können, dann wirken die gleichen Verschiebekräfte F1, F2 in der entgegengesetzten Richtung auch auf die beiden Ausgleichsräder 8, 9. Damit tendieren die Ausgleichsräder 8, 9 dazu, sich von den Achswellenrädern 4, 6 weg in Richtung des Gehäuses 2 zu bewegen. Der Zahneingriff wirkt also wie eine Feder, welche die Ausgleichsräder 8, 9 verdrängen will. Erst wenn beide Kräfte F1, F2 im Gleichgewicht stehen, befinden sich die Ausgleichsräder 8, 9 in einer stabilen Position. Je näher die Ausgleichsräder 8, 9 einem der beiden Achswellenräder 4, 6 kommen desto größer ist die Verschiebekraft F1/F2. Insbesondere erst dann, wenn die Ausgleichsräder 8, 9 in der Mitte (zentrale Position) zwischen beiden Achswellenrädern 4, 6 steht, sind sie in ihrer stabilen Position angekommen.

Die genannte zentrale Position oder zentrale Lage beschreibt eine Position der Ausgleichsräder 8, 9 relativ zu den Achswellenrädern 4, 6. Bei Kegelrädern gibt es den sogenannten Achskreuzungspunkt, d.h. die Verlängerungen der kolinearen Längsachsen L1, L2 der Ausgleichsräder 8, 9 und die Verlängerungen der kolinearen Längsachsen L3, L4 der Achswellenräder 4, 6 schneiden sich in einem Punkt 23, der als Mittelpunkt des Differentialgetriebes 1 angesehen werden kann. Das ist die theoretische zentrale Position, in der die Ausgleichsräder 8, 9 liegen sollten, damit sie optimal laufen und beste Eigenschaften aufweisen. Wenn die Ausgleichsräder 8, 9 in der Gleichgewichtslage sind, dann befinden sie sich bevorzugt in oder zumindest nahe diesem theoretischen Punkt (Achskreuzungspunkt 23).

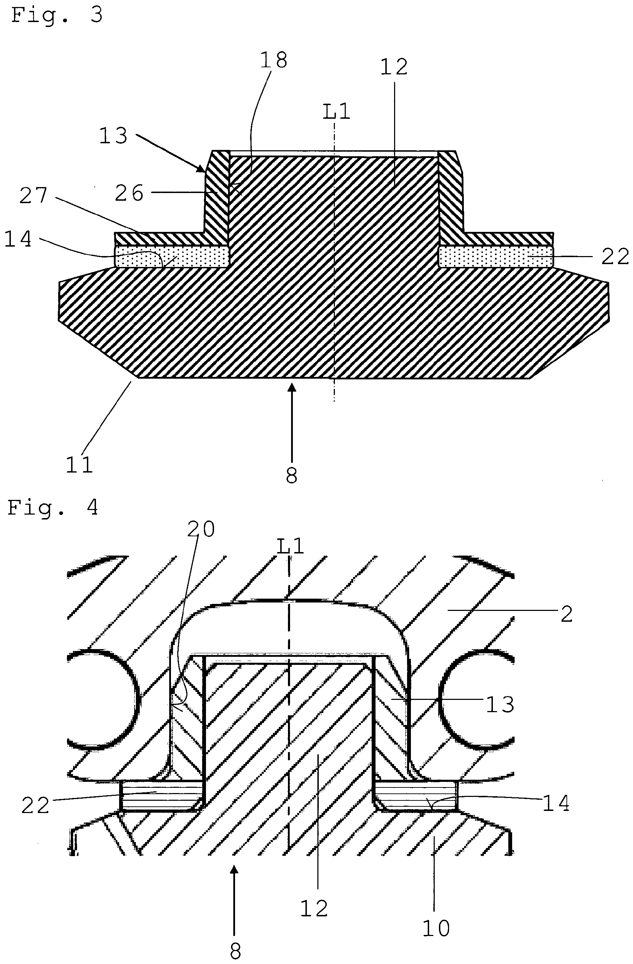

Die Kulissensteine 13, 17 nach Figur 1 und 2 weisen im Längsschnitt T-förmige Profile mit einem Loch bzw. einer Aufnahme 18, 19 auf. Figur 3 zeigt schematisiert, dass zwischen den im Längsschnitt T-förmigen Kulissensteinen (in dem gezeigten Ausführungsbeispiel zwischen dem ersten Kulissenstein 13) und den Rückenflächen 14 der drei identischen Ausgleichsräder 8 jeweils ein Zwischenelement 22 angeordnet sein kann, z.B. eine Reibscheibe und/oder eine Federscheibe. Der Kulissenstein 13 weist einen ersten Schenkel 26 sowie einen zweiten Schenkel 27 auf, der senkrecht zu dem ersten Schenkel 26 verläuft. Der erste Schenkel 26 verläuft koaxial um eine Längsachse L1 des Zapfens 12 des Ausgleichsrades 8. Der erste Schenkel 26 des Kulissensteins 13 weist die zu dem Zapfen 12 passende Aufnahme 18 auf, wobei der Zapfen 12 drehbar innerhalb der Aufnahme 18 gelagert ist, in dem gezeigten Ausführungsbeispiel mittels einer Gleitlagerung. Der erste Schenkel 26 ist in der ersten Gleitbahn 20 des Gehäuses 2 des Differentialgetriebes 1 verschiebbar gelagert. Die Rückenfläche 14 des Ausgleichsrades 8 stützt sich an dem zweiten Schenkel 27 des T-förmigen Kulissensteins 13 ab, insbesondere über das Zwischenelement 22.

Wenn es sich bei dem Zwischenelement 22 um eine Reibscheibe handelt, dann kann die Reibscheibe den Verschleiß an dem Kulissenstein 13 und an dem Gehäuse 2 reduzieren, die aus einem weicheren Metall gefertigt sein können als der Kulissenstein 13, der beispielsweise aus einem gehärteten Metall gefertigt sein kann. Es kann sich bei dem Zwischenelement 22 auch um eine Ausgleichsrad-Federscheibe handeln, die eine Ausgleichsrad-Federkraft auf das Ausgleichsrad 8 ausübt, sodass die Ausgleichsrad-Federkraft die Ausgleichsradverzahnung 11 des Ausgleichsrades 8 in den Eingriff mit den beiden Achswellenradverzahnungen 5, 7 der beiden Achswellenräder 4, 6 drückt. Eine Reibscheibe kann auch mit einer Ausgleichsrad-Federscheibe kombiniert werden, indem beide beispielsweise übereinandergelegt werden, oder indem eine Ausgleichsrad-Federscheibe zwischen zwei Reibscheiben angeordnet wird. Zwischen den anderen beiden Ausgleichsrädern und Kulissensteinen können ebenso Reibscheiben und/oder Ausgleichsrad-Federscheiben angeordnet sein, wie dies vorstehend im Zusammenhang mit dem ersten Kulissenstein 13 und dem ersten Ausgleichsrad 8 beschrieben worden ist.

Figur 4 zeigt, dass die Kulissensteine, in dem gezeigten Beispiel der erste Kulissenstein13, alternativ rohrförmig sein können (nur ein erster Schenkel und kein zweiter Schenkel gemäß Figur 3). Dabei kann ein Zwischenelement 22 zwischen der Rückenfläche 14 des Ausgleichsrades 8 einerseits und dem Kulissenstein 13 sowie dem Gehäuse 2 andererseits angeordnet sein, ähnlich wie dies im Zusammenhang mit Figur 3 beschrieben worden ist.

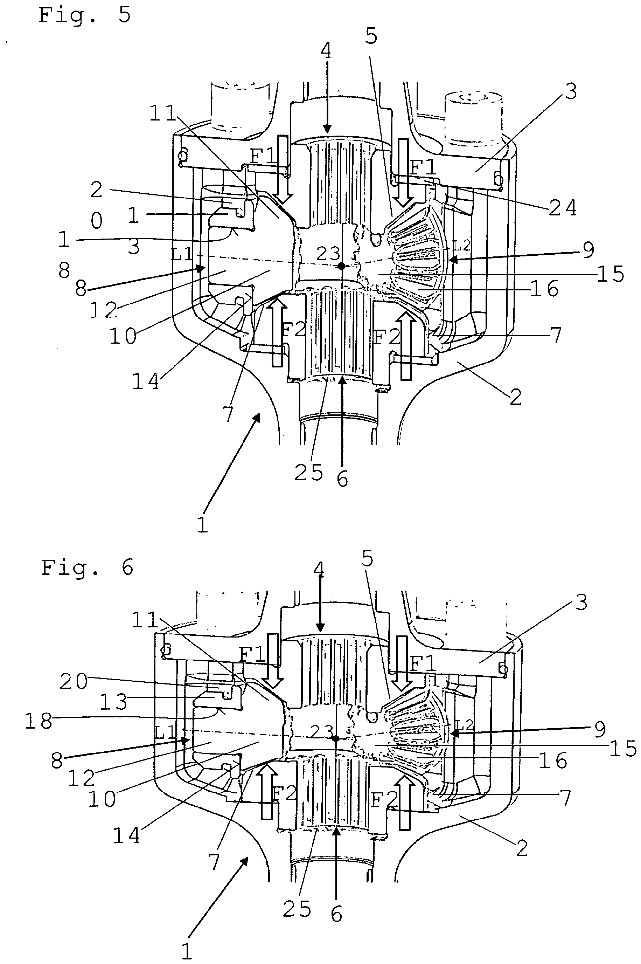

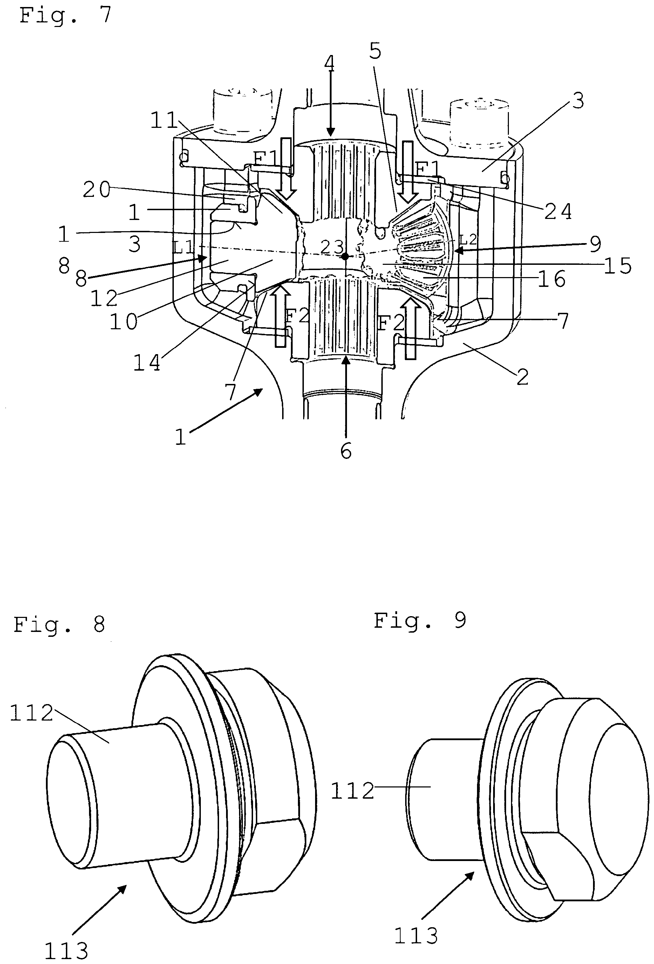

Figur 5 zeigt das Differentialgetriebe 1 nach Figur 1, wobei zwischen dem Deckel 3 und dem ersten Achswellenrad 4 eine Anlaufscheibe 24 angeordnet ist. Auf der anderen Seite ist zwischen dem zweiten Achswellenrad 6 und dem Gehäuse 2 eine Achswellenrad-Federscheibe 25 angeordnet. Die Achswellenrad-Federscheibe 25 übt eine Achswellenrad-Federkraft auf das zweite Achswellenrad 6 aus, sodass die Achswellenrad-Federkraft die zweite Achswellenradverzahnung 7 des zweiten Achswellenrades 6 in den Eingriff mit den Ausgleichsradverzahnungen 11, 16 der Ausgleichsräder 8, 9 drückt. Die Anlaufscheibe 24 ist optional und kann weggelassen werden, was durch Figur 6 gezeigt ist. Alternativ kann auch die Anlaufscheibe 24 vorgesehen werden, wobei die Achswellenrad-Federscheibe 25 weggelassen wird, was durch Figur 7 gezeigt ist.

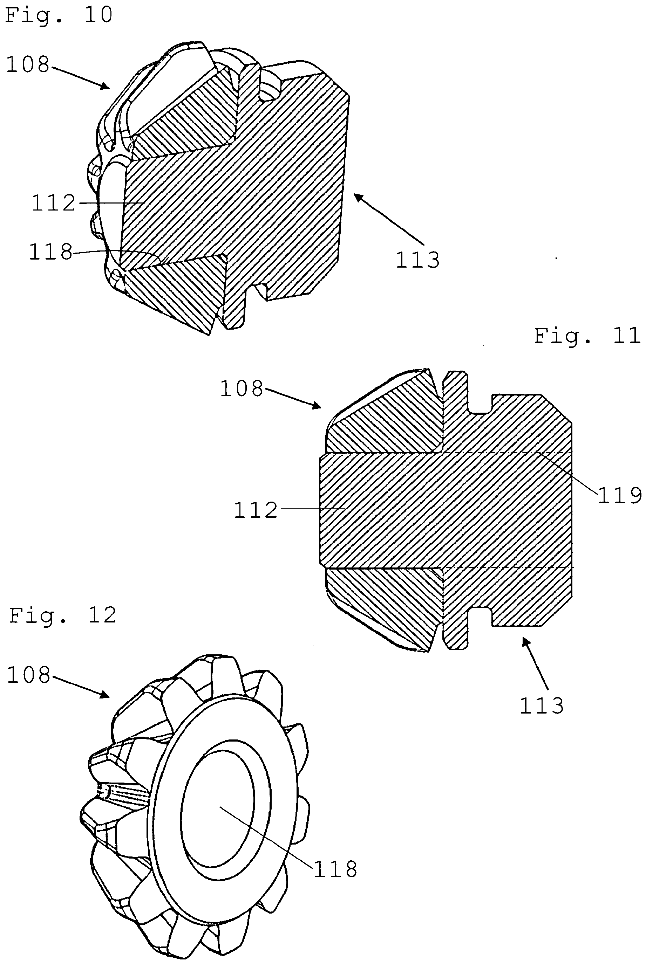

Figur 8 bis 13 zeigen einen alternativen Kulissenstein 113 und/oder ein alternatives Ausgleichsrad 108 für das Differentialgetriebe 1 nach Figur 1. In dem gezeigten Ausführungsbeispiel weist der Kulissenstein 113 einen Zapfen 112 auf und das Ausgleichsrad 108 umfasst eine zu dem Zapfen 112 passende Aufnahme 118. Der Zapfen 112 des Kulissensteins 113 kann in die Aufnahme 118 gesteckt werden, sodass das Ausgleichsrad 108 drehbar auf dem Kulissenstein 113 gelagert ist, wie dies in Figur 10 und 11 gezeigt ist.

Der Zapfen 112 ist in dem durch Figur 8 bis 13 gezeigten Ausführungsbeispiel einteilig mit dem Rest des Kulissensteins 113 verbunden. Alternativ kann der Kulissenstein 113 eine Bohrung 119 aufweisen, die in Figur 11 durch Strichpunktlinien angedeutet ist. Der Zapfen 112 ist in dieser Variante ein von dem Kulissenstein 113 getrenntes Bauteil und kann als Zylinderstift bezeichnet werden. Der Zylinderstift 112 ist in die Bohrung 119 des Kulissensteins 113 insbesondere drehfest eingeführt bzw. gelagert. Der Zylinderstift 112 ragt aus der Bohrung 119 des Kulissensteins 113 heraus, wobei das Ausgleichsrad 108 mit seiner zu dem Zylinderstift 112 passenden Aufnahme 118 drehbar auf dem Zylinderstift 112 gelagert ist.

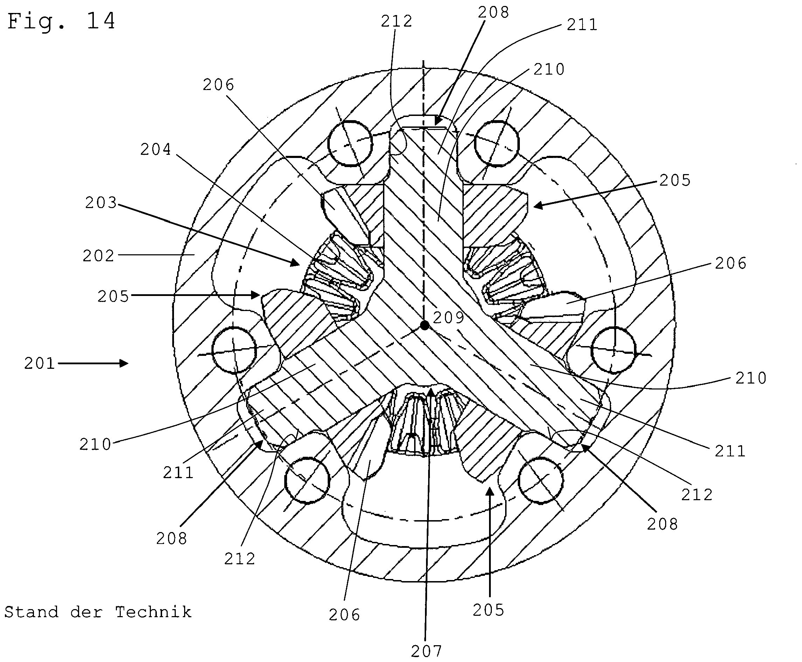

Figur 14 zeigt ein alternatives Differentialgetriebe 201 mit Spider bzw. einer Zapfenanordnung. Das Differentialgetriebe 201 umfasst ein Gehäuse 202, zwei Achswellenräder 203 (von denen eines durch Figur 14 gezeigt ist) mit jeweils einer Achswellenradverzahnung 204. Beide Achswellenräder 203 sind Kegelräder. Somit handelt es sich auch bei den Achswellenradverzahnungen 204 um Kegelradverzahnungen. Weiterhin umfasst das Differentialgetriebe 201 insgesamt drei gleiche Ausgleichsräder 205, die in einer Umfangsrichtung äquidistant jeweils um 120° voneinander beabstandet angeordnet sind. Alle drei Ausgleichsräder 205 sind in dem gezeigten Ausführungsbeispiel Kegelräder. Die Ausgleichsräder 205 weisen an ihrer radial äußeren Fläche jeweils eine Ausgleichsradverzahnung 206 auf, bei der es sich um eine Kegelradverzahnung handelt.

Ferner umfasst das Differentialgetriebe 201 eine Zapfenanordnung 207 mit drei Zapfen 208. Ausgehend von einem gemeinsamen Mittelpunkt 209 der Zapfenanordnung 207 sind die drei Zapfen 208 in einer Umfangsrichtung äquidistant jeweils um 120° voneinander beabstandet angeordnet. Die drei Zapfen 208 sind starr miteinander verbunden, in dem gezeigten Ausführungsbeispiel einteilig. Die drei Ausgleichsräder 205 sind jeweils auf einem mittleren Abschnitt 210 von einem der drei Zapfen 208 drehbar gelagert, in dem gezeigten Ausführungsbeispiel mittels einer Gleitlagerung. Jeder der Zapfen 208 weist ferner ein frei auslaufendes (distales) Ende 211 auf, welches jeweils in einer von drei durch das Gehäuse 202 gebildeten Gleitbahnen 212 verschiebbar gelagert ist. Die Gleitbahnen 212 verlaufen derart zwischen den beiden Achswellenrädern 203, dass sich die Zapfenanordnung 207 mit allen drei Zapfen 208 und den darauf drehbar gelagerten Ausgleichsrädern 205 gemeinsam zwischen den beiden Achswellenrädern 203 hin und her bewegen können. Durch diese Verschiebbarkeit können sich die Achswellenräder - verursacht durch Verschiebekräfte des Zahneingriffs zwischen Achswellenrädern und Ausgleichrädern - in eine zentrale Position verschieben, wie dies im Zusammenhang mit dem Differentialgetriebe 1 nach Figur 1 und 2 beschrieben worden ist.

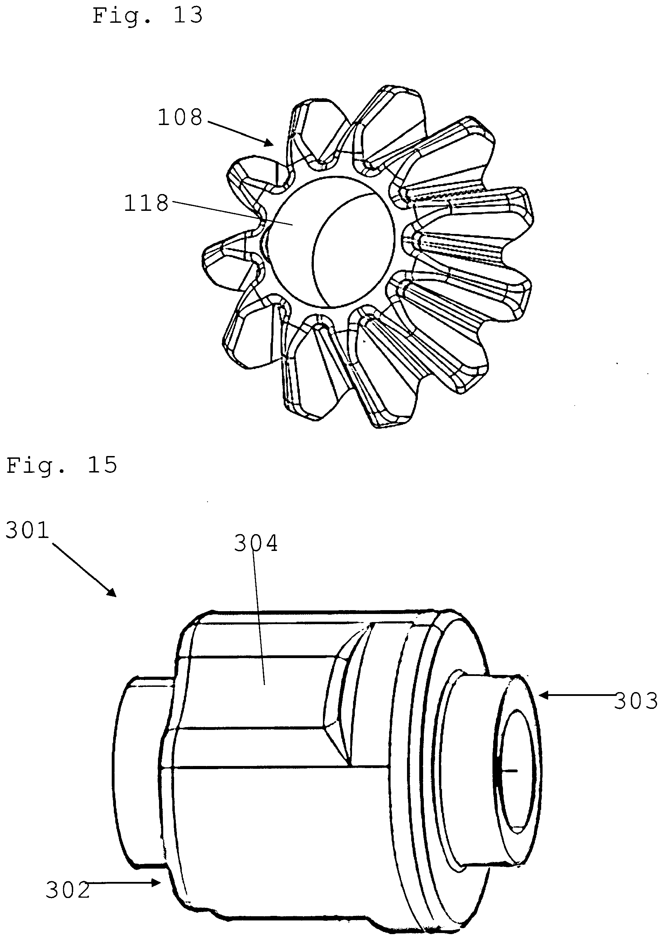

Figur 15 zeigt ein weiteres Differentialgetriebe 301 von außen, welches in seinem Inneren beispielsweise wie das Differentialgetriebe nach Figur 1 oder wie das Differentialgetriebe 201 nach Figur 14 aufgebaut sein kann. Das Differentialgetriebe weist ein Gehäuse 302 sowie einen Deckel 303 auf, welcher das Gehäuse 302 auf einer seiner Stirnseiten verschließt. Das Gehäuse 302 weist eine Tripoden-Geometrie auf. Unter einer Tripoden-Geometrie kann im Zusammenhang mit Figur 15 insbesondere verstanden werden, dass das Gehäuse 302 auf seiner Außenseite drei Material und Gewicht sparende Taschen 304 (Einbuchtungen) aufweist, die nach innen gerichtet sind. Die drei Taschen 304 sind in dem gezeigten Ausführungsbeispiel in Umfangsrichtung um 120° zueinander beabstandet angeordnet. Ein Element zum Antrieb des Differentialgetriebes 301, z.B. ein Antriebszahnrad oder ein Teil einer Achswelle, kann zu den drei Taschen 304 komplementär gestaltete, nach innen gerichtete Ausbuchtungen aufweisen, die ebenfalls in Umfangsrichtungen um 120° zueinander beabstandet angeordnet sind. Die Ausbuchtungen des Elements zum Antrieb des Differentialgetriebes 301 können mit den drei Taschen 304 des Gehäuses 302 in Eingriff gebracht werden, sodass ein Formschluss erzeugt wird und sodass Drehmomente übertragen werden können.

### Bezugszeichenliste:

- F1: erste Verschiebekraft
- F2: zweite Verschiebekraft
- L1: Längsachse erstes Ausgleichsrad
- L2: Längsachse zweites Ausgleichsrad
- L3: Längsachse erstes Achswellenrad
- L4: Längsachse zweites Achswellenrad

- 1: Differentialgetriebe
- 2: Gehäuse
- 3: Deckel
- 4: erstes Achswellenrad
- 5: erste Achswellenradverzahnung
- 6: zweites Achswellenrad
- 7: zweite Achswellenradverzahnung
- 8: erstes Ausgleichsrad
- 9: zweites Ausgleichsrad
- 10: erster Teller
- 11: erste Ausgleichsradverzahnung
- 12: erster Zapfen
- 13: erster Kulissenstein
- 14: erste Rückenfläche
- 15: zweiter Teller
- 16: zweite Ausgleichsradverzahnung
- 17: zweiter Kulissenstein
- 18: erste Aufnahme
- 19: zweite Aufnahme
- 20: erste Gleitbahn
- 21: zweite Gleitbahn
- 22: Reibscheibe, Ausgleichsrad-Federscheibe
- 23: Achskreuzungspunkt
- 24: Anlaufscheibe
- 26: erster Schenkel Kulissenstein
- 27: zweiter Schenkel Kulissenstein
- 108: Ausgleichsrad
- 112: Zapfen
- 113: Kulissenstein
- 118: Aufnahme
- 201: Differentialgetriebe
- 202: Gehäuse
- 203: Achswellenrad
- 204: Achswellenradverzahnung
- 205: Ausgleichsrad
- 206: Ausgleichsradverzahnung
- 207: Zapfenanordnung
- 208: Zapfen
- 209: Mittelpunkt der Zapfenanordnung
- 210: mittlerer Abschnitt Zapfen
- 211: distales Ende Zapfen
- 212: Gleitbahn
- 301: Differentialgetriebe
- 302: Gehäuse
- 303: Deckel
- 304: Tripoden-Geometrie

## Patentansprüche

1. Differentialgetriebe (1; 201; 301) für ein Fahrzeug, das Differentialgetriebe (1; 201; 301) aufweisend
- ein Gehäuse (2; 202; 302) mit wenigstens einer Gleitbahn (20, 21; 212),
- ein erstes Achswellenrad (4; 203) mit einer ersten Achswellenradverzahnung (5; 204),
- ein zweites Achswellenrad (6) mit einer zweiten Achswellenradverzahnung (7) und
- wenigstens ein Ausgleichsrad (8, 9; 108; 205) mit einer Ausgleichsradverzahnung (11, 16; 206),
- wenigstens einen Kulissenstein (13, 17; 113),
wobei
- der wenigstens eine Kulissenstein (13, 17; 113) das wenigstens eine Ausgleichsrad (8, 9; 108) drehbar aufnimmt,
- das Ausgleichsrad (8, 9; 108, 205) zwischen dem ersten Achswellenrad (4; 203) und dem zweiten Achswellenrad (6) angeordnet ist,
- die Ausgleichsradverzahnung (11, 16; 206) im Eingriff mit der ersten Achswellenradverzahnung (5; 204) steht,
- die Ausgleichsradverzahnung (11, 16; 206) im Eingriff mit der zweiten Achswellenradverzahnung (7) steht,
- die erste Achswellenradverzahnung (5; 204) eine erste Verschiebekraft (F1) auf die Ausgleichsradverzahnung (11, 16; 206) ausübt,
- die zweite Achswellenradverzahnung (7) eine zweite Verschiebekraft (F2) auf die Ausgleichsradverzahnung (11, 16; 206) ausübt,
- der wenigstens eine Kulissenstein (13, 17; 113) gemeinsam mit dem wenigstens einem Ausgleichsrad (8, 9; 108; 205) in der Gleitbahn (20, 21; 212) verschiebbar gelagert ist, sodass sich der Kulissenstein (13, 17; 113) und das Ausgleichsrad (8, 9; 205) gemeinsam zwischen dem ersten Achswellenrad (4; 203) und dem zweiten Achswellenrad (6) bewegen können, und
- das Ausgleichsrad (8, 9; 108; 205) durch die erste Verschiebekraft (F1) und die zweite Verschiebekraft (F2) in eine Gleichgewichtslage zwischen dem ersten Achswellenrad (4; 203) und dem zweiten Achswellenrad (6) verschoben wird.

2. Differentialgetriebe (1) nach Anspruch 1, wobei
- das Ausgleichsrad (8, 9) einen Zapfen (12) aufweist,
- der Kulissenstein (13, 17) eine zu dem Zapfen (12) passende Aufnahme (18, 19) aufweist, und
- der Zapfen (12) drehbar innerhalb der Aufnahme (18, 19) gelagert ist.

3. Differentialgetriebe (1) nach Anspruch 1, wobei
- der Kulissenstein (113) einen Zapfen (112) aufweist,
- das Ausgleichsrad (108) eine zu dem Zapfen (112) passende Aufnahme (118) aufweist, und
- der Zapfen (112) drehbar innerhalb der Aufnahme (118) gelagert ist.

4. Differentialgetriebe (1) nach einem der vorstehenden Ansprüche, das Differentialgetriebe (1) weiterhin umfassend wenigstens eine Reibscheibe (22), wobei
- das Ausgleichsrad (8) eine Rückenfläche (14) aufweist, die sich an dem Gehäuse (2) und/oder an dem Kulissenstein (13) nach einem der Ansprüche 2 bis 4 abstützt,
- die Reibscheibe (22) zwischen der Rückenfläche (14) und dem Gehäuse (2) und/oder zwischen der Rückenfläche (14) und dem Kulissenstein (13) angeordnet ist.

5. Differentialgetriebe (1) nach Anspruch 4, wobei
- der Kulissenstein (13) im Längsschnitt T-förmig gestaltet ist und einen ersten Schenkel (26) sowie einen zweiteren Schenkel (27) aufweist, der senkrecht zu dem ersten Schenkel (26) verläuft,
- der erste Schenkel (26) des T-förmigen Kulissensteins (13) in der Gleitbahn (20) verschiebbar gelagert ist, und
- die Rückenfläche (14) des Ausgleichsrades (8) sich an dem zweiten Schenkel (27) des T-förmigen Kulissensteins (13) abstützt.

6. Differentialgetriebe (1) nach einem der vorstehenden Ansprüche, das Differentialgetriebe (1) aufweisend
- ein erstes Ausgleichsrad (8) mit einer ersten Ausgleichsradverzahnung (11),
- ein zweites Ausgleichsrad (9) mit einer zweiten Ausgleichsradverzahnung (16),
- einen ersten Kulissenstein (13) und
- einen zweiten Kulissenstein (17),
wobei
- der erste Kulissenstein (13) das erste Ausgleichsrad (8) drehbar aufnimmt und der zweite Kulissenstein (17) das zweite Ausgleichsrad (9) drehbar aufnimmt,
- die beiden Ausgleichräder (8, 9) zwischen dem ersten Achswellenrad (4) und dem zweiten Achswellenrad (6) angeordnet sind,
- die erste Ausgleichsradverzahnung (11) und die zweite Ausgleichsradverzahnung (16) im Eingriff mit der ersten Achswellenradverzahnung (5) und mit der zweiten Achswellenradverzahnung (7) stehen,
- die erste Achswellenradverzahnung (5) eine erste Verschiebekraft (F1) auf die erste Ausgleichsradverzahnung (11) sowie auf die zweite Ausgleichsradverzahnung (16) ausübt und die zweite Achswellenradverzahnung (7) eine zweite Verschiebekraft (F2) auf die erste Ausgleichsradverzahnung (11) sowie auf die zweite Ausgleichsradverzahnung (16) ausübt,
- das Gehäuse (2) eine erste Gleitbahn (20) und eine zweite Gleitbahn (21) aufweist,
- der erste Kulissenstein (13) gemeinsam mit dem ersten Ausgleichsrad (8) in der ersten Gleitbahn (20) verschiebbar gelagert ist, sodass sich der erste Kulissenstein (13) und das erste Ausgleichsrad (8) zwischen dem ersten Achswellenrad (4) und dem zweiten Achswellenrad (6) bewegen können,
- der zweite Kulissenstein (17) gemeinsam mit dem zweiten Ausgleichsrad (9) in der zweiten Gleitbahn (21) verschiebbar gelagert ist, sodass sich der zweite Kulissenstein (17) und das zweite Ausgleichsrad (9) zwischen dem ersten Achswellenrad (4) und dem zweiten Achswellenrad (6) bewegen können, und
- das erste Ausgleichsrad (8) und das zweite Ausgleichsrad (9) durch die erste Verschiebekraft (F1) und die zweite Verschiebekraft (F2) jeweils in eine Gleichgewichtslage zwischen dem ersten Achswellenrad (4) und dem zweiten Achswellenrad (6) verschoben werden.

7. Differentialgetriebe (1) nach Anspruch 6, wobei
- das erste Ausgleichsrad (8) ein Kegelrad mit einer ersten Längsachse (L1) ist,
- das zweite Ausgleichrad (9) ein Kegelrad mit einer zweiten Längsachse (L2) ist,
- das erste Ausgleichsrad (8) und das zweite Ausgleichsrad (9) durch die erste Verschiebekraft (F1) und durch die zweite Verschiebekraft (F2) derart in die Gleichgewichtslage verschoben werden, dass sich ein Schnittpunkt der Verlängerungen der ersten Längsachse (L1) und der zweiten Längsachse (L2) in Richtung eines Achskreuzungspunktes (23) bewegt, der in dem Mittelpunkt des Differentialgetriebes (1) liegt.

8. Differentialgetriebe (1) nach Anspruch 7, wobei das erste Ausgleichsrad (8) und das zweite Ausgleichsrad (9) durch die erste Verschiebekraft (F1) und durch die zweite Verschiebekraft (F2) derart in die Gleichgewichtslage verschoben werden, dass sich der Schnittpunkt der ersten Längsachse (L1) und der zweiten Längsachse (L2) bis in den Achskreuzungspunkt (23) bewegt.

9. Differentialgetriebe (1) nach einem der vorstehenden Ansprüche, das Differentialgetriebe (1; 101) weiterhin umfassend wenigstens eine Achswellenrad-Federscheibe (25), wobei die Achswellenrad-Federscheibe (25) derart zwischen einem der Achswellenräder (6) und dem Gehäuse (2) angeordnet ist, dass die Achswellenrad-Federscheibe (22) eine Achswellenrad-Federkraft auf das betreffende Achswellenrad (6) ausübt, sodass die Achswellenrad-Federkraft die Achswellenradverzahnung (7) des betreffenden Achswellenrades (6) in den Eingriff mit der Ausgleichsradverzahnung (11, 16) des wenigstens einen Ausgleichsrades (8, 9) drückt.

10. Differentialgetriebe (1) nach einem der vorstehenden Ansprüche, das Differentialgetriebe (1) weiterhin umfassend wenigstens eine Ausgleichsrad-Federscheibe (22), wobei die Ausgleichsrad-Federscheibe (22) derart zwischen dem wenigstens einen Ausgleichsrad (8, 9) und dem Gehäuse (2) oder zwischen dem wenigstens einen Ausgleichsrad (8, 9) und dem wenigstens einen Kulissenstein (13) angeordnet ist, dass die Ausgleichsrad-Federscheibe (22) eine Ausgleichsrad-Federkraft auf das Ausgleichsrad (8, 9) ausübt, sodass die Ausgleichsrad-Federkraft die Ausgleichsradverzahnung (11, 16) des Ausgleichsrads (8, 9) in den Eingriff mit den Achswellenradverzahnungen (5, 7) der Achswellenräder (4, 6) drückt.

11. Differentialgetriebe (301) nach einem der vorstehenden Ansprüche, wobei eine äußere Oberfläche des Gehäuses (302) eine Tripoden-Geometrie (304) aufweist, sodass eine komplementär zu der Tripoden-Geometrie (302) der äußeren Oberfläche des Gehäuses (301) geformte innere Oberfläche eines Antriebselements formschlüssig mit dem Gehäuse (301) verbunden werden kann.

12. Fahrzeug umfassend ein Differentialgetriebe (1; 101; 201; 301) nach einem der vorstehenden Ansprüche.
